## Europäisches Patentamt
## European Patent Office
## Office européen des brevets

(19)

(11) Veröffentlichungsnummer: **0 047 446**
**B1**

(12)
# EUROPÄISCHE PATENTSCHRIFT

(45) Veröffentlichungstag der Patentschrift:
04.06.86

(51) Int. Cl.⁴: **A 01 F 25/20**

(21) Anmeldenummer: **81106666.1**

(22) Anmeldetag: **27.08.81**

(54) **Gerät zum Abtragen, Laden, Transportieren, Bereiten und Austeilen von Tierfutter.**

(30) Priorität: **09.09.80 DE 3033824**

(43) Veröffentlichungstag der Anmeldung:
**17.03.82 Patentblatt 82/11**

(45) Bekanntmachung des Hinweises auf die Patenterteilung:
**04.06.86 Patentblatt 86/23**

(84) Benannte Vertragsstaaten:
**AT BE CH FR GB IT LI NL SE**

(56) Entgegenhaltungen:
**FR - A - 2 231 302**
**FR - A - 2 383 803**
**FR - A - 2 401 603**
**FR - A - 2 449 396**

(73) Patentinhaber: **von der Heide, Hans, Ibbenbürener Strasse 17, D-4533 Laggenbeck (DE)**

(72) Erfinder: **von der Heide, Hans, Ibbenbürener Strasse 17, D-4533 Laggenbeck (DE)**

(74) Vertreter: **Schulze Horn, Stefan, Dipl.-Ing. et al, Patentanwälte Dipl.-Ing. S. Schulze Horn M.SC. Dr. H. Hoffmeister Goldstrasse 36, D-4400 Münster (DE)**

ACTORUM AG

**Beschreibung**

Die Erfindung betrifft ein Gerät zum Abtragen, Laden, Transportieren, Bereiten und Austeilen von Tierfutter.

Es ist eine Vorrichtung bekannt, bei welcher eine Fräswalze und der nachgeordnete Aufnahmebehälter eine Einheit in der Weise bilden, dass sich die Fräswalze am Ende des Aufnahmebehälters befindet und ihre Auf- und Abbewegung zusammen mit diesem ausführt, wenn die Einheit am Dreipunktgestänge eines Schleppers angebracht ist (DE-OS 14 81 446).

Von Nachteil ist dabei, dass der Aufnahmebehälter nur eine eng begrenzte Aufnahmekapazität für das zu ladende Silagegut besitzt und daher häufige Fahrten notwendig macht, wobei auch noch der Schlepper für andere wichtige Arbeiten ausfällt.

Bei einer anderen bekannten Vorrichtung zum Abtragen, Transportieren und Austeilen von Silagefutter wurde deshalb vorgeschlagen, dass die um eine horizontale Achse drehbar angeordnete und von einer Seite her angetriebene, am Umfang mit Schneidmessern besetzte Fräswalze, die zusätzlich zu ihrer Drehbewegung auch noch als Ganzes in vertikaler Richtung auf- und abbewegbar ist, an zwei den Aufnahmebehälter von aussen übergreifenden Armen angeordnet ist, an denen sie unabhängig vom Aufnahmebehälter ihre Auf- und Abbewegung ausführen kann, während der Aufnahmebehälter in Ruhelage verbleibt. (DE-B-25 35 701).

Auch diese Vorrichtung ist zum Nachteil des übrigen Hofbetriebes auf die Inanspruchnahme des Schleppers angewiesen.

Weiterhin bekannt ist eine Vorrichtung, die eine Förderung und Mischung von Silagegut und Zusatzfuttermittel mittels zweier in Längsrichtung der Vorrichtung verlaufender Förderschnecken und die Austragung des gemischten Tierfutters über ein in Querrichtung der Vorrichtung verlaufendes Förderband vornimmt (FR-A-2 401 603).

Nachteilig ist hierbei, dass ein Vorratsbehälter für das beizumischende Zusatzfuttermittel nicht vorgesehen ist, und dass die Vorrichtung zur Fortbewegung auf ein Zugfahrzeug angewiesen ist.

Schliesslich ist noch eine weitere Vorrichtung bekannt, die selbstfahrend ist und das Silagegut mittels mehrerer in Querrichtung der Vorrichtung übereinander verlaufender Walzen auf ein in Querrichtung zur Vorrichtung verlaufendes Austeilorgan in Form eines Förderbandes transportiert (FR-A-2 383 803).

Die Nachteile dieser Vorrichtung liegen darin, dass eine Beimischung von Zusatzfutter nicht möglich ist, dass das Fahrzeug ein labiles Fahrwerk mit sehr eng beieinanderstehenden Vorderrädern aufweist und dass es von der Bedienungsperson nur auf einer offenen Plattform stehend bedienbar ist.

Die Aufgabe der Erfindung besteht in einer Überwindung der beim Stand der Technik vorhandenen Grenzen und Schwierigkeiten sowie in einer Weiterentwicklung und Verbesserung der bekannten Vorrichtungen mit dem Ziel, einerseits eine Unabhängigkeit vom Schlepper oder von einem sonstigen Zugfahrzeug bei gleichzeitig sicherem Fahrverhalten und einfacher und sicherer Bedienbarkeit zu erreichen, das Abtragen der Silage vom Fahrsilo oder der Miete zu erleichtern, die Ladekapazität für das Silagegut zu erhöhen, und insbesondere ein insofern universal verwendbares neues Gerät zu schaffen, als dieses auch in der Lage sein soll, das gewonnene Silagefutter aufs beste aufzubereiten und gegebenenfalls mit einem in einem am Gerät vorhandenen Laderaumabteil befindlichen Zusatzfutter zu einem hochqualifizierten Mischfutter zu bereiten.

Die Lösung der gestellten Aufgabe gelingt dadurch, dass das neue Gerät folgende Merkmale aufweist:

a) eine Selbstfahreinrichtung mit Fahrgestell, Ladepritsche, Fahrersitz mit Bedienungs-, Lenk- und Bremseinrichtungen, sowie mit Antriebsmitteln zum Fahren und/oder für die mechanischen Einrichtungen,

b) eine an der Rückseite angeordnete höhenverstellbare Vorrichtung zum Abtrennen, Zerkleinern und zum Schleudertransport des Silageguts vom Fahrsilo oder der Miete, mit einer daran angelenkten, nach Massgabe der Höhenverstellung mitverschwenkbaren Ladeschurre,

c) ein daran anschliessendes, mit einem bodenseitigen Kratzförderer ausgestattetes Laderaumabteil für das Silagegut, dessen Abschluss in Transportrichtung nach vorn durch mehrere in einer annähernd senkrechten Ebene angeordnete Walzen gebildet wird und mit einer Einrichtung zum Austeilen des Futters mit einem über die Breite der Ladepritsche angeordneten Austeilorgan in Form eines in der Förderrichtung umkehrbaren Förderbandes und ist durch gekennzeichnet, dass die Ladeschurre gegenüber der höhenverstellbaren Vorrichtung verschwenkbar ist, dass der Förderer ein Kratzförderer ist, dass in der Ladepritsche eine sich über die Breite der Ladepritsche erstreckende Ausfallöffnung angeordnet ist und dass

d) eine Einrichtung zum Bereiten des Tierfutters vorhanden ist, welche ein im vorderen Bereich der Ladepritsche angeordnetes Laderaumabteil für ein zum Mischen mit dem Silagegut vorgesehenes Futtermittel mit geneigten, zu einem Austragschlitz hin abfallenden Bodenpartien und ein im Bereich des Schlitzes angeordnetes, vorzugsweise rotierendes Austrags- und /oder Dosierelement in Form einer Schnecke oder Walze umfasst.

Die Erfindung ermöglicht ein universell zur Gewinnung eines fertigen Mischfutters geeignetes selbstfahrendes Gerät mit besonderer Befähigung zum Abtragen und Laden sowie Aufbereiten von Silagefutter als Hauptbestandteil der fertigen Futtermischung, sowie mit den zum Bevorraten und Beimengen des Futtermittels und der richtigen Dosierung der Futterbestandteile benötigten Funktionsorgane in einer kompakten, in sich geschlossenen und doch sehr übersichtlichen und leicht und sicher zu bedienenden Baueinheit.

Weitere Ausgestaltungen der Erfindung ergeben sich aus den Ansprüchen 2 bis 5. Dabei hat die Anordnung von rotierenden Messern an der als Schneidkopf ausgebildeten Vorrichtung zum Abtrennen, Zerkleinern und zum Schleudertransport den Vorteil eines Abbaues der Miete in geraden Tranchen, wodurch der sonst unvermeidliche Futterverlust minimiert wird. Die sehr lange vertikale Führung gewährleistet dabei eine Abtragsmöglichkeit auch bei relativ hohen Fahrsilos und Mieten.

Dadurch, dass im Gegensatz zum Schlepperbetrieb beim Selbstfahrer nach der Erfindung mit der schwenkbaren Steuersäule eine wahlweise Rechts-Linkssteuerung möglich ist, kann das neue Gerät, insbesondere auch wegen der Umkehrbarkeit der Förderrichtung der Austeilvorrichtung bei jeder Stallung zurechtkommen, was dessen Einsatz wesentlich verbessert.

Mithin ist das Gerät nach der Erfindung geeignet, die gestellten Aufgaben voll und ganz zu erfüllen.

Weitere Merkmale und Vorteile ergeben sich aus der folgenden Beschreibung, wobei ein Ausführungsbeispiel des neuen Gerätes anhand der Zeichnungen näher erläutert ist. Es zeigen:

Figur 1 eine Seitenansicht der Erfindung mit weggelassener Seitenwand,

Figur 2 eine Draufsicht auf das gleiche Gerät.

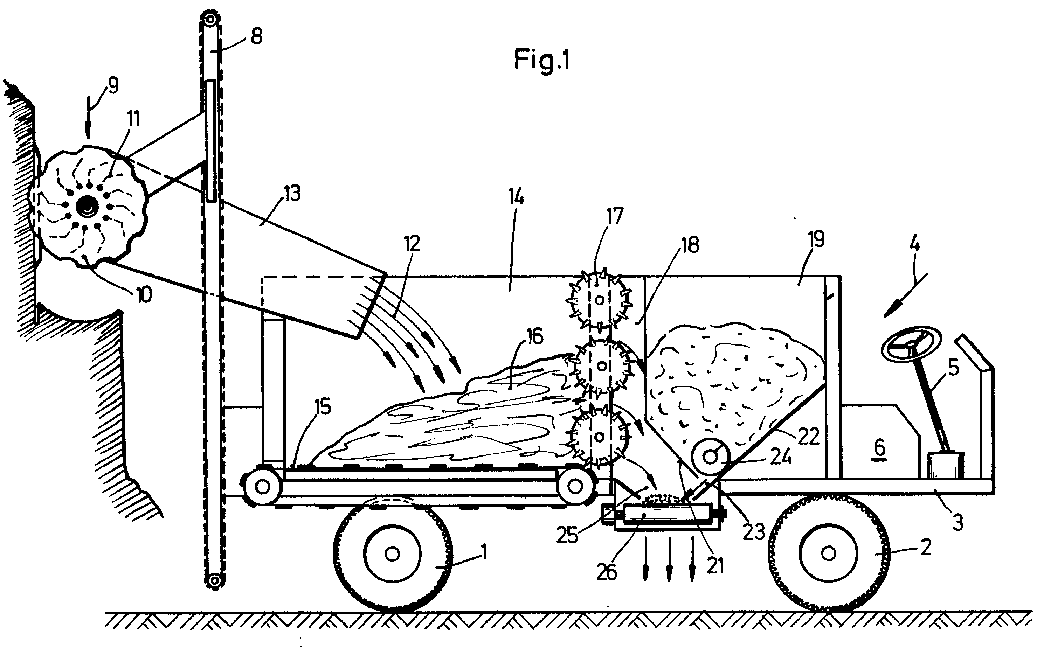

Wie aus der beispielhaften Ausführung des neuen Gerätes nach Figur 1 ersichtlich, handelt es sich beim Grundaufbau um einen selbstfahrenden Wagen, dessen Fahrgestell die Hinterräder 1 und die lenkbaren Vorderräder 2 sowie eine durchgehende Pritsche 3 aufweist. Vorne befindet sich der Fahrersitz 4 mit der Steuersäule 5, wobei die Antriebsmittel, welche beispielsweise aus einer Kombination Dieselmotor/Hydraulikanlage bestehen, unter der Motorverkleidung 6 eingebaut sind.

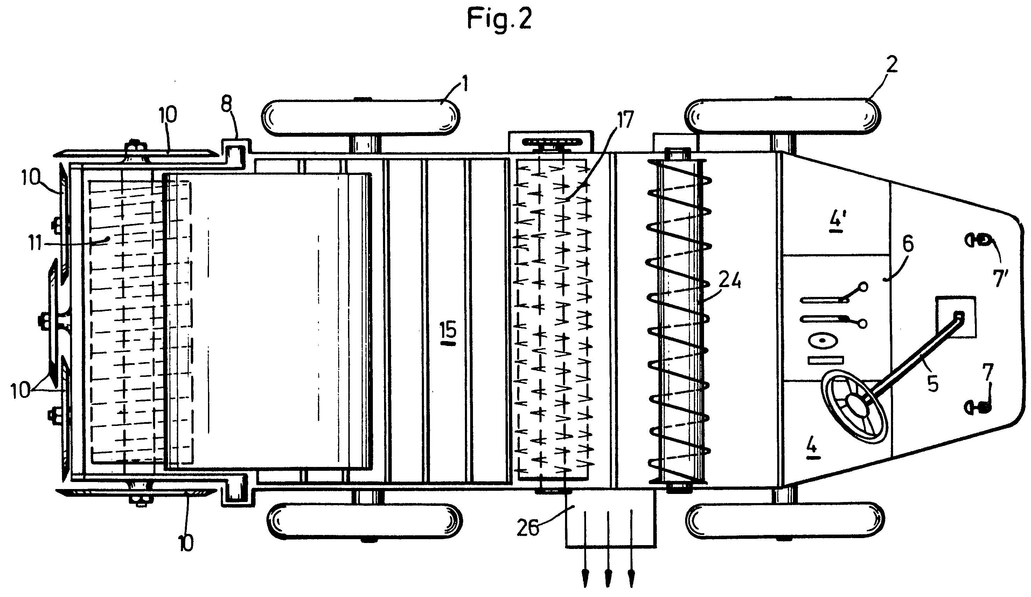

Wie aus der Draufsicht in Figur 2 ersichtlich, hat das Gerät nach der Erfindung je rechts und links einen Fahrersitz 4, 4′ für wahlweise Rechts-Linkssteuerung, wobei die Steuersäule 5 entsprechend schwenkbar ist. Entsprechend sind auch Bremspedale 7, 7′ rechts oder links angeordnet.

Am rückwärtigen Bereich des Gerätes ist die vertikale Führung 8 zum Heben und Senken der aus einem Schneidkopf 9 bestehenden Vorrichtung zum Abtragen, Zerkleinern und zum Schleudertransport angeordnet. Diese ist mit einer Anzahl rotierender Messer 10 bestückt, deren Antrieb, wie auch der Antrieb im folgenden noch zu beschreibender weiterer Funktionselemente, durch hydraulische Einzelantriebe erfolgt. In dem vom Messerkopf 9 umgrenzten Raum ist eine Schlegelwalze 11 angeordnet, mit einer Vielzahl an der mit horizontaler Achse rotierenden Walze 11 gelenkig befestigten Schlegeln, die den Abschnitt der Silage zerkrümeln und das krümelige Silagegut 12 mit Hilfe der schwenkbar am Schneidkopf 9 angelenkten Transportschurre 13 in das erste Laderaumabteil 14 befördern. Ein an dessen Boden angeordneter Kratzförderer 15 fördert das aufgeladene Silagegut 16 nach vorn gegen die als Abschluss des Laderaumabteils 14 in einer annähernd senkrechten Ebene angeordneten Walzen 17. Diese haben die Aufgabe, das Silagegut in den Austragsraum 18 auszutragen.

Zwischen diesem und dem Fahrersitz 4 befindet sich ein weiteres Abteil 19 für ein Futtermittel, das dem zur Mischung vorbereitenden Silagefutter 16 zur Bereitung des fertigen Mischfutters zugemischt werden wird. Zu diesem Zwecke ist das Laderaumabteil 19 mit geneigten Bodenpartien 21, 22 wie ein Schüttgutsilo ausgestattet, zwischen denen sich ein Austragsschlitz 23 befindet, in dessen Bereich eine Austrags- und Dosierschnecke 24 angeordnet ist. Das aus beiden Laderaumabteilen 14 und 19 in den Austragsraum 18 gelangende Gut fällt durch einen Bodenspalt 25 auf ein Misch- und Austeilorgan in Form des Förder- und/oder Wurfbandes 26.

Der Antrieb zum Fahren geschieht durch hydraulische Einzelantriebe an vorzugsweise beiden Achsen der Hinterräder 1 sowie der Vorderräder 2. Die Antriebe für die übrigen Funktionseinheiten wie Kratzförderer 15, rotierende Messer 10, Hubeinrichtung 8 für den Messerkopf 9, Walzen 17, Austragsschnecke 24, Förderband 26 etc., sind ebenfalls vorzugsweise mit individuellen Hydraulikmotoren ausgestattet, die vom gemeinsamen Hydrauliknetz des Gerätes gespeist werden.

**Patentansprüche**

1. Gerät zum Abtragen, Laden, Transportieren, Bereiten und Austeilen von Tierfutter mit einer Selbstfahreinrichtung mit Fahrgestell (1, 2), Ladepritsche (3) und Fahrersitz (4, 4′) mit Bedienungs-, Lenk- und Bremseinrichtung (5, 7) sowie mit Antriebsmitteln zum Fahren und für die mechanischen Einrichtungen, mit einer an der Rückseite angeordneten höhenverstellbaren Vorrichtung (9) zum Abtrennen, Zerkleinern und zum Schleudertransport des Silagegutes (12) von Fahrsilos oder Mieten, mit einer daran angebrachten, nach Massgabe der Höhenverstellung mitbewegbaren Ladeschurre (13) und mit einem daran anschliessenden, mit einem Förderer (15) ausgestatteten Laderaumabteil (14) für das Silagegut (16), dessen Abschluss in Richtung nach vorn durch mehrere, in einer annähernd senkrechten Ebene angeordnete Walzen (17) gebildet wird und mit einer Einrichtung zum Austeilen des Futters mit einem über die Breite der Ladepritsche angeordneten Austeilorgan in Form eines in der Förderrichtung umkehrbaren Förderbandes, dadurch gekennzeichnet, dass die Ladeschurre (13) gegenüber der höhenverstellbaren Vorrichtung (9) verschwenkbar ist, dass der Förderer (15) für das Silagegut (16) ein Kratzförderer ist, dass in der Ladepritsche eine sich über die Breite der Ladepritsche erstreckende Ausfallöffnung (25) angeordnet ist, und dass eine Einrichtung zum Bereiten des Tierfutters vorhanden ist, welche ein im vorderen Bereich der Ladepritsche (3) angeordnetes Laderaumabteil (19) für ein zum Mischen mit dem Silagegut (16) vorgesehenes Futtermittel mit geneigten, zu einem Austragsschlitz (23) hin abfallenden Bodenpartien (22) und ein im Bereich des Schlit-

zes (23) angeordnetes, vorzugsweise rotierendes Austrags- und/oder Dosierelement in Form einer Schnecke (24) oder Walze umfasst.

2. Gerät nach Anspruch 1, dadurch gekennzeichnet, dass das Antriebsmittel zum Fahren und/oder für die mechanischen Einrichtungen des Gerätes eine Brennkraftmaschine zur Leistungserzeugung und eine Hydraulikanlage zur Leistungsverzweigung aufweist, wobei einzelne Leistungsverbraucher wie Fahrgestell mit Rädern (1, 2); Vorrichtung (9) zum Abtrennen, Zerkleinern und zum Schleudertransport; Kratzförderer (15); Walzen (11, 17); Schnecke (24); Förderband (26) etc. mit hydraulischen Einzelantrieben ausgestattet sind.

3. Gerät nach einem der Ansprüche 1 oder 2, dadurch gekennzeichnet, dass die Vorrichtung (9) zum Abtrennen, Zerkleinern und zum Schleudertransport ein rechteckiger Rahmen in der Breite des Gerätes mit rückwärts und seitlich angeordneten, um horizontale Achsen rotierenden Messern (10) ist, der in vertikalen, mit Hubeinrichtungen ausgestatteten Führungen (8) zur Ausführung einer Hub- und Senkbewegung in der Grössenordnung von einigen Metern angeordnet ist, und der innerhalb des von den Messern (10) umgrenzten Raumes mit einer Schlegelwalze (11) ausgestattet ist.

4. Gerät nach einem der Ansprüche 1 bis 3, dadurch gekennzeichnet, dass die Steuersäule (5) zur wahlweisen Steuerung des Gerätes von der linken oder rechten Seite des Fahrersitzes (4, 4') in der Mitte des Gerätes angeordnet ist, und nach links und rechts verschwenkbar ist.

5. Gerät nach einem der Ansprüche 1 bis 4, dadurch gekennzeichnet, dass der Kratzförderer (15) ein der Breite des Gerätes entsprechendes, mit Querstegen besetztes, endloses Förderband aufweist.

**Claims**

1. An apparatus for the removing, loading, transporting, preparing and dispensing of animal feed, comprising a self-propelled mechanism including a chassis (1, 2), a loading platform (3) and a driver's seat (4, 4') provided with operating, steering and braking means (6, 7), and including drive means for travelling and for the mechanical means, including a vertically adjustable device (9), disposed at the rear side, for the separating, cutting and centrifugal conveying of the silage material (12) from movable silos or clamps, having a loading chute (13) attached to said device to be movable along with the latter in accordance with the vertical adjustment thereof, and including an adjoining loading compartment (14) for the silage material (16) and equipped with a conveyor (15), the end portion of said compartment, in the forward direction, being formed by a plurality of rolls (17) disposed in an approximately vertical plane, and further including means for dispensing the animal feed, having a dispensing element positioned across the width of the loading platform and being in the form of a conveyor belt adapted to be reversed in its direction of conveyance, characterized in that the loading chute (13) is pivotable relative to the vertically adjustable device (9), that the conveyor (15) for the silage material (16) comprises a scraper conveyor, that the loading platform has provided therein a discharge opening (25) which extends across the width of the loading platform, and that means for preparing the animal feed is provided which comprises a loading compartment (19), disposed in the front portion of the loading platform (3), for a feed material for admixture to the silage material (16) and having oblique bottom portions (22) being inclined towards a discharge slit (23), and a preferably rotatable discharging and/or metering element in the form of a worm (24) or roll disposed adjacent to the slit (23).

2. The apparatus according to claim 1, characterized in that said drive means for travelling and/or for the mechanical means of the apparatus comprises an internal combustion engine for power generation and a hydraulic system for power distribution, with the individual power consuming devices, such as chassis with wheels (1, 2), device (9) for separating, cutting and centrifugal conveying, scraper conveyor (15), rolls (11, 17), worm (24), conveyor belt (26), etc., being each equipped with hydraulic separate drive mechanisms.

3. The apparatus according to any of claims 1 or 2, characterized in that said device (9) for separating cutting and centrifugal conveying comprises a rectangular frame of a width equal to that of said apparatus and including cutters (10) positioned at the rear and at the sides and being rotatable about horizontal axes, the frame being arranged in vertical guide means (8) provided with lifting devices for performing a lifting and lowering movement of the order of some meters, and said frame being equipped with a hammer roll (11) within the space defined by the cutters (10).

4. The apparatus according to any one of claims 1 to 3, characterized in that the steering column (5) is positioned in the center of the apparatus and adapted to be pivoted to the left and to the right for selectively steering the apparatus from the left or right side of the driver's seat (4, 4').

5. The apparatus according to any one of claims 1 to 4, characterized in that the scraper conveyor (15) includes an endless conveyor belt of a width equal to that of the apparatus and having transverse bars mounted thereon.

**Revendications**

1. Machine pour le prélèvement, le chargement, le transport, la préparation et la distribution de fourrage, comportant: un dispositif automobile avec châssis mobile (1, 2), plateforme de chargement (3) et siège de conducteur (4, 4'), systèmes de commande, direction et freinage (5, 7); des moyens d'entraînement pour le déplacement et pour les systèmes mécaniques; un dispositif (9) réglable en hauteur, agencé sur le côté arrière, pour le prélèvement, le fractionnement et le transport-projection de produit d'ensilage (12) pris dans un silo ou une meule; une goulotte de chargement (13) qui est agencée sur ce dispositif (9) et est mobile en fonction du réglage de hauteur; un compartiment (14) de chargement de produit d'ensilage (16), associé à cette goulotte, équipé d'un transporteur (15) et terminé vers l'avant par plusieurs cylindres (17) agencés dans un plan sensiblement vertical; et un système pour la distribution du fourrage, comportant un organe distributeur agencé sur la largeur de la plateforme et réalisé sous la forme d'une bande transporteuse dont la direction de transport peut être inversée; caractérisée en ce que la goulotte de chargement (13) peut être soumise à un pivotement par rapport au dispositif (9) réglable en hauteur, en ce que le transporteur (15) pour le produit d'ensilage (16) est un transporteur à racloirs, en ce qu'une ouverture de distribution (25) s'étendant sur la largeur de la plateforme de chargement est aménagée dans celle-ci, et en ce qu'il y a un dispositif de préparation du fourrage, qui comporte un compartiment de chargement (19) agencé dans la région avant de la plateforme (3), pour un aliment destiné à être mélangé au produit d'ensilage (16), ce compartiment (19) ayant des parties de fond (22) en saillie descendant vers une fente d'extraction (23), et un élément extracteur et/ou doseur, de préférence rotatif, agencé dans la région de la fente (23) et réalisé sous la forme d'une vis sans fin (24) ou d'un cylindre.

2. Machine selon la revendication 1, caractérisée en ce que le moyen d'entraînement pour déplacer la machine et/ou pour actionner les dispositifs mécaniques de celle-ci comporte une machine motrice thermique pour produire l'énergie, une installation hydraulique pour distribuer l'énergie, et des consommateurs d'énergie individuels tels que châssis avec roues (1, 2), dispositif (9) de prélèvement, fractionnement et transport-projection, transporteur à racloirs (15), cylindres (11, 17), vis (24), bande transporteuse (26), etc. qui sont équipés d'entraînements hydrauliques individuels.

3. Machine selon l'une des revendications 1 ou 2, caractérisée en ce que le dispositif (9) de prélèvement, fractionnement et transport-projection est un cadre rectangulaire dans la largeur de la machine, avec des couteaux rotatifs (10) agencés vers l'arrière et latéralement, qui tournent autour d'axes horizontaux, ce cadre étant agencé dans des guides verticaux (8) équipés de moyens de levage, pour l'exécution d'un mouvement de montée et descente de l'ordre de quelques mètres, ledit cadre étant en outre équipé d'un cylindre récolteur (11) à l'intérieur de l'espace périmétriquement délimité par les couteaux (10).

4. Machine selon l'une quelconque des revendications 1 à 3, caractérisée en ce que, pour permettre le pilotage de la machine au choix depuis le côté gauche ou le côté droit du siège (4, 4') du conducteur, la colonne de direction (5) est agencée au milieu de la machine et peut être basculée vers la gauche et la droite.

5. Machine selon l'une des revendications 1 à 4, caractérisée en ce que le transporteur à racloirs (15) présente une bande transporteuse sans fin correspondant à la largeur de la machine et garnie de barrettes transversales.

Fig.1

0 047 446

# Fig.2